# EUROPÄISCHE PATENTSCHRIFT

(11) **EP 1 846 275 B1**
(45) Veröffentlichungstag und Bekanntmachung des Hinweises auf die Patenterteilung: **17.03.2010**
(21) Anmeldenummer: 05822344.7
(22) Anmeldetag: 22.11.2005
(51) Int. Cl.: B60S 1/52, B60S 1/40, B60S 1/38

(54) **WISCHBLATT**
WIPER BLADE
BALAI D'ESSUIE-GLACE

(30) Priorität: 25.11.2004 DE 102004056835
(43) Veröffentlichungstag der Anmeldung: 24.10.2007
(73) Patentinhaber: VALEO SYSTEMES D'ESSUYAGE, 78321 La Verrière (FR)
(72) Erfinder: EGNER-WALTER, Bruno, 74076 Heilbronn (DE); SCHÄUBLE, Michael, 71665 Vaihingen/Enz (DE)
(74) Vertreter: Jahn, Wolf-Diethart
(86) Internationale Anmeldenummer: PCT/EP2005/012491
(87) Internationale Veröffentlichungsnummer: WO 2006/056406

(56) Entgegenhaltungen:
- EP-A- 1 209 050
- BE-A- 544 311
- DE-A1- 10 036 122
- GB-A- 2 362 812
- US-A- 2 432 690
- US-A- 4 060 872
- US-A- 4 339 839

## Beschreibung

Die Erfindung bezieht sich auf ein Wischblatt und dabei speziell auf ein flaches Wischblatt für eine Wischvorrichtung zum Reinigen von Scheiben an Fahrzeugen, beispielsweise an Straßenfahrzeugen gemäß Oberbegriff Patentanspruch 1.

Zur Verbesserung der Reinigung von Fahrzeugscheiben ist es bekannt (DE-A-100 00 372), in Wischblättern wenigstens einen, sich in Richtung der Wischblattlangsachse erstreckenden Spritzkanal vorzusehen, der dann mit einer Vielzahl von in Wischblattlängsrichtung aufeinander folgenden Spritzöffnungen versehen ist Über diese kann dann bei Betätigen der Scheibenwaschanlage eine Wasch- oder Reinigungsflüssigkeit (im einfachsten Fall Wasser oder aber Wasser mit Reinigungs- und/oder Gefrierschutzzusätzen) auf die Fahrzeugscheibe aufgebracht werden, und zwar beispielsweise in unmittelbarer Nähe der von dem Wischgummi bzw. der Wischleiste gebildeten Wischlippe.

Zum Zuführen der Wasch- und Reinigungsflüssigkeit ist der Spritzkanal an einem Ende des flachen Wischblattes mit einer äußeren Schlauchleitung verbunden. Nachteilig ist hierbei, dass sich die Schlauchleitung ausgehend von dem Wischarm der Wischvorrichtung über eine relativ große freiliegende Länge erstreckt, die nicht nur durch den Abstand des betreffenden Wischblattendes vom Wischarm bei gegen die Fahrzeugscheibe anliegendem Wischblatt bestimmt ist, sondern auch durch die Krümmung, die das Wischblatt bei von der Fahrzeugscheibe weggeklapptern Wischarm aufweist. Diese freiliegende Schlauchlänge ist optisch störend, kann aber auch z. B. in Autowaschanlagen sehr schnell beschädigt werden.

Vorgeschlagen wurde weiterhin (DE 21 33 270), eine äußere Versorgungs- oder Schlauchleitung zum Zuführen der Reinigungs- oder Waschflüssigkeit an einen in einem Wischgummi ausgebildeten Spritzkanal an diesen Kanal zwischen den beiden Enden des Wischgummis bzw. des Wischblattes anzuschließen. Eine konstruktive brauchbare Lösung enthält dieser Vorschlag allerdings nicht.

Bekannt ist schließlich auch (FR 2 648 771), die Trag- oder Federschiene für den Wischgummi eines Wischblattes, die über eine von mehreren bügelartigen Tragelementen gebildete Tragbügelanordnung mit dem Wischarm verbunden ist, mit einem Spritzkanal auszubilden, der eine Vielzahl von Spritzöffnungen aufweist und sich über die gesamte Länge der Federschiene erstreckt. Die Zuführung der Reinigungs- bzw. Waschflüssigkeit erfolgt über ein zusätzliches Anschlussstück in der Mitte der Federschiene. Diese bekannte Ausbildung konstruktiv aufwendig. Es handelt sich hierbei auch nicht um ein flaches Wischblatt.

US-A-2 432 690 offenbart den Oberbegriff des Anspruchs 1.

Aufgabe der Erfindung ist es, ein Wischblatt aufzuzeigen, welches als flaches Wischblatt ausgebildet werden kann und die Nachteile einer optisch störenden und leicht zu beschädigenden freiliegenden Schlauchleitung zum Zuführen der Reinigungs- und Waschflüssigkeit vermeidet. Zur Lösung dieser Aufgabe ist ein Wischblatt entsprechend dem Patentanspruch 1 ausgebildet.

Der besondere Vorteil der erfindungsgemäßen Ausbildung besteht darin, dass an dem zum Verbinden des Wischblattes mit dem Wischarm dienenden Adapter zugleich auch das Anschluss- und Verteilerelement zum Zuführen sowie zum Verteilen der Wasch- und Reinigungsflüssigkeit auf die wenigstens zwei, sich in entgegengesetzter Richtung von dem Adapter wegerstreckenden Abschnitte des Spritzkanals vorgesehen ist.

Bei einer Ausführungsform der Erfindung ist dieses im Wesentlichen als T-Stück wirkende oder ausgebildete Anschluss- und Verteilerelement in den Adapter integriert, d. h. dort ist der Verteilerkanal mit dem ersten Anschluss zum Anschließen an die äußere Schlauchleitung und mit den zweiten Anschlüssen zum Anschließen an die wischblattseitigen Kanalabschnitte ausgebildet. Bei einer weiteren Ausführungsform der Erfindung ist das Anschluss- und Verteilerelement ein gesondertes Bauteil, welches an dem Adapter befestigbar ist.

Weiterbildungen der Erfindung sind Gegenstand der Unteransprüche. Die Erfindung wird im Folgenden anhand der Figuren an Ausführungsbeispielen näher erläutert.
Es zeigen:
- Fig. 1 - 4: jeweils in sehr schematischer Darstellung einen Wischarm und ein an diesem befestigtes Wischblatt mit mehreren Spritzdüsen oder - öffnungen, bei unterschiedlichen Ausführungsformen und bei jeweils in einer Parkstellung befindlichem Wischarm;
- Fig. 5: in vereinfachter Darstellung eine Draufsicht auf ein Wischblatt gemäß der Erfindung;
- Fig. 6: eine vereinfachte Teildarstellung der Figur 5 im Bereich des Adapters zum Befestigen des Wischblattes am Wischarm;
- Fig. 7: in vereinfachter Darstellung einen Schnitt entsprechend der Linie I - I der Figur 6;
- Fig. 8: einen Schnitt durch das Wischblatt der Figuren 5 und 7;
- Fig. 9 - 10: eine Hälfte oder ein Teil des zweiteiligen Adapters der Figuren 6 und 7 in verschiedenen Ansichten;
- Fig. 11: einem Schnitt entsprechend der Linie II - II der Figur 9;
- Fig. 12: eine Darstellung ähnlich den Figuren 7 bei einer weiteren möglichen Ausführungsform der Erfindung;
- Fig. 13 - 16: eine Hälfte oder ein Teil des zweiteiligen Adapters der Figur 12 in perspektivischer Darstellung, in verschiedenen Ansichten;
- Fig. 17: einen Schnitt entsprechend der Linie III - III der Figur 15, zusammen mit einem Anschluss- und Verteilerelement;
- Fig. 18: in perspektivischer Darstellung ein Anschluss- und Verteilerelement zur Verwendung bei dem Wischblatt bzw. dem Adapter der Figuren 12 -17
- Fig. 19: einen Schnitt durch das Anschluss- und Verteilerelement der Figur 18;
- Fig. 20: einen Schnitt durch ein Wischblatt entsprechend einer weiteren möglichen Ausführungsform.

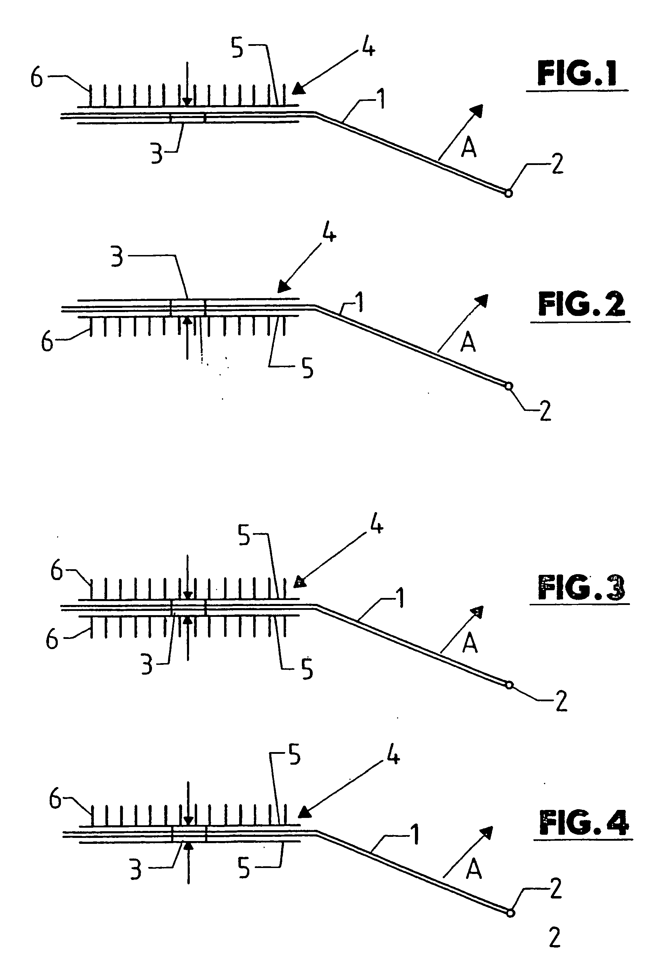

In den Figuren 1 - 4 ist 1 jeweils ein Wischarm einer Wischvorrichtung beispielsweise für die Frontscheibe eines Straßenfahrzeugs, z.B. eines Pkws. Der Wischarm 1 ist an einem Ende durch einen nicht dargestellten Antrieb um die Achse einer Wischerwelle 2 schwenkbar, und zwar zwischen der in der Figur 1 dargestellten Parkstellung und einer nicht dargestellten Umkehrstellung.

An dem der Wischerwelle 2 entferntliegenden Ende ist am Wischarm 1 mittels eines Adapters 3 ein Wischblatt 4 befestigt, welches in den Figuren 1 - 4 jeweils nur sehr schematisch dargestellt ist und welches beispielsweise in seiner Ausbildung als flaches Wischblatt wenigstens eine Federschiene, einen Wischgummi mit gegen die Fahrzeugscheibe anliegender Wischlippe sowie beispielsweise auch ein als Spoiler ausgebildetes Profilelement aufweist, das sich dann ebenso wie die Federschiene, der Wischgummi über die gesamte Länge des Wischblattes 4 erstreckt.

Bei der Ausführung der Figur 1 ist im Wischblatt 4 ein sich in Wischblattlängsrichtung erstreckender und schematisch mit 5 angedeuteter Spritzkanal für eine Wasch- oder Reinigungsflüssigkeit ausgebildet. Der Spritzkanal 5 besitzt eine Vielzahl von Spritzöffnungen, aus denen beim Betätigen der Scheibenwaschanlage die Wasch- oder Reinigungsflüssigkeit (beispielsweise Wasser oder Wasser mit Reinigungs- und/oder Gefrierschutzzusätzen) auf die Fahrzeugscheibe aufgebracht wird, wie dies in der Figur 1 schematisch mit den Strahlen 6 angedeutet ist. Der Spritzkanal 5 ist mit einer nicht dargestellten, am Wischarm 1 befestigten oder im Wischarm 1 integrierten Leitung (z. B. Schlauchleitung) verbunden, über die die Wasch- oder Reinigungsflüssigkeit mit dem erforderlichen Druck zugeführt wird. Wie Figur 1 zeigt, befinden sich die die Strahlen 6 erzeugenden Spritzöffnungen an der beim Bewegen des Wischarmes 1 aus der Parkstellung (Pfeil A) vorauseilenden Längsseite des Wischblattes 4.

Die Figur 2 zeigt eine Ausführung, die sich von der Ausführung der Figur 1 lediglich dadurch unterscheidet, dass die die Strahlen 6 erzeugenden Spritzöffnungen an derjenigen Wischblattlängsseite vorgesehen sind, die beim Bewegen des Wischarmes 1 aus der Parkstellung (Pfeil A) nacheilt.

Die Figur 3 zeigt eine Ausführung, die sich von der Ausführung der Figuren 1 und 2 dadurch unterscheidet, dass das Wischblatt 4 Spritzöffnungen aufweist, die an beiden Wischblattlängsseiten wirksam sind, also beim Betätigen der Scheibenwaschanlage Wasch- bzw. Reinigungsflüssigkeit sowohl vor als auch hinter dem Wischblatt auf die Fahrzeugscheibe ausgebracht wird. Die Versorgung der Spritzkanäle 5 erfolgt beispielsweise über eine äußere Versorgungsleitung mit entsprechender Verzweigung beispielsweise im Bereich des Adapters 3 oder aber über zwei getrennte Versorgungsleitungen.

Die Figur 4 zeigt eine Ausführung ähnlich Figur 3, bei der das Wischblatt 4 wiederum mit an beiden Längsseiten wirksamen Spritzöffnungen versehen ist, bei der allerdings durch eine entsprechende Steuerung in Abhängigkeit von der Bewegungsrichtung des Wischarmes 1 nur jeweils die an einer Wischblattlängsseite wirksamen Spritzöffnungen bzw. der zugehörige Spritzkanal 5 mit dem Wasch- und Reinigungsmedium versorgt werden, beispielsweise nur der Spritzkanal der Spritzöffnungen an der bei der Bewegung vorauseilenden Wischblattlängsseite.

Allen in den Figuren 1 - 4 dargestellten Ausführungsform ist gemeinsam, dass das Zuführen der Wasch- und Reinigungsflüssigkeit jeweils im Bereich des Adapters 3 an einer Position zwischen den beiden Enden des Wischblattes 4 erfolgt, sodass auch unter Berücksichtigung der notwendigen Relativbewegung zwischen Wischblatt 4 und Wischarm 1 die äußere Verbindung zum Zuführen der Wasch- und Reinigungsflüssigkeit über eine relativ kurze, nicht störende und auch nicht störanfällige freie Schlauchlänge erfolgen kann.

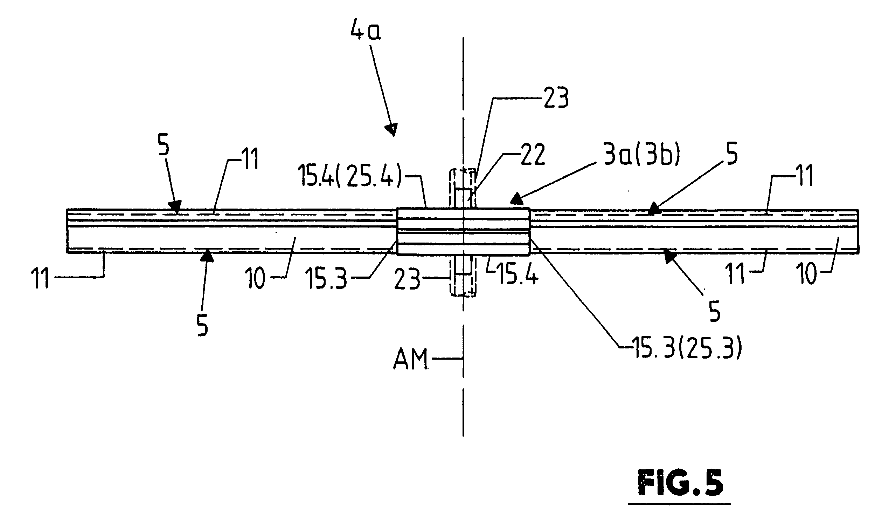

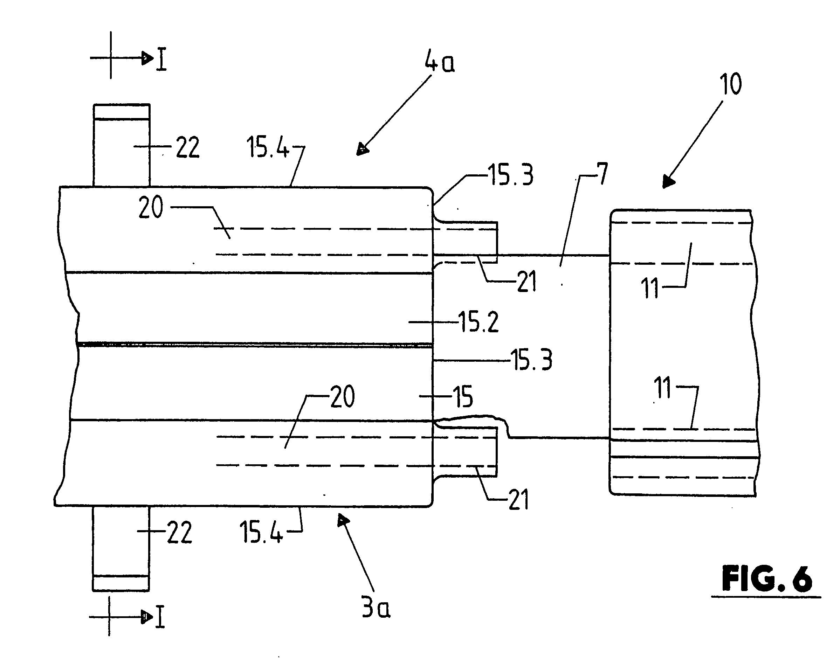

Die Figuren 5 - 11 zeigen ein Wischblatt 4a, welches als flaches Wischblatt im Wesentlichen aus einer innenliegenden Federschiene 7, aus einem an der Federschiene 7 gehaltenen Wischgummi 8 mit Wischlippe 9 und aus einem zweiteiligen auf der Federschiene 7 befestigten Profilkörper 10 besteht, der mit einem Profilabschnitt 10.1 an der Oberseite des Wischblattes 4a einen Spoiler bildet und in zwei unteren Profilabschnitten 10.2 beidseitig vom Wischgummi 8 jeweils mit einem Kanalabschnitt 11 eine Spritzkanales für die Wasch- und Reinigungsflüssigkeit ausgebildet ist. Die Federschiene 7, der Wischgummi 8 sowie der Profilkörper 10 erstrecken sich jeweils über die gesamte Länge des Wischblattes 4. An den beiden Enden des Wischblattes sind die Kanäle 11 in geeigneter Weise, beispielsweise durch eingesetzte Stopfen oder aber durch angeformte Zapfen oder Stopfen von dort vorgesehenen Abschlussstücken dicht verschlossen.

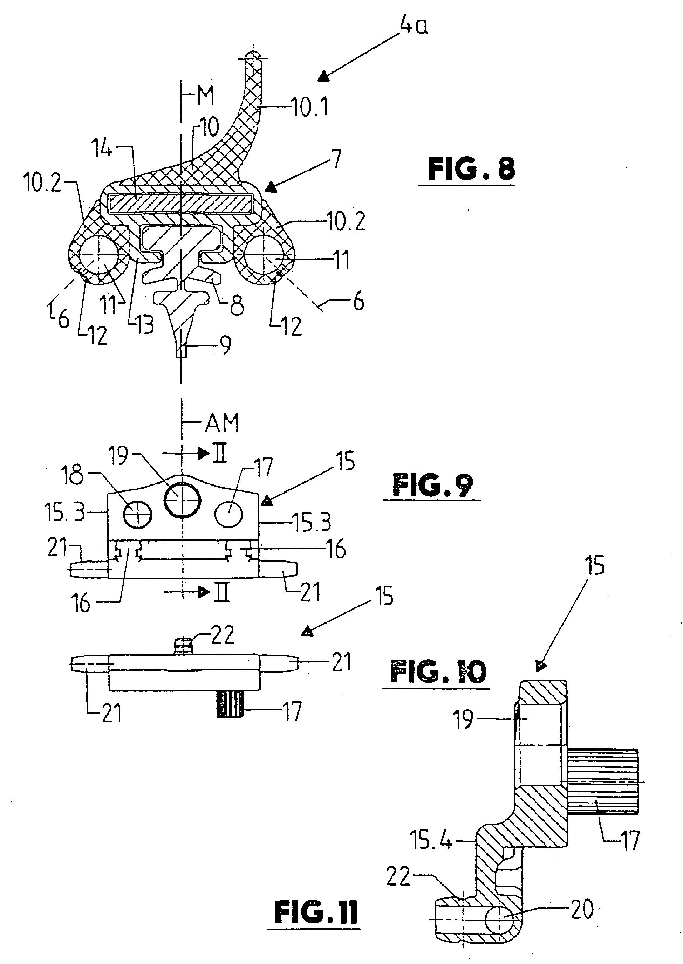

Wie die Figur 8 auch zeigt, sind die Profilabschnitte 10.2 mit einer Vielzahl von in Längsrichtung des Wischblattes 4a aufeinander folgenden Spritzöffnungen 12 versehen, die jeweils an der Außenseite des Profilkörpers 10 offen sind und in einen Kanalabschnitt 11 münden. Die Achsen der Spritzöffnungen 12 sind so orientiert, dass sie mit der Mittelebene M der Federschiene und des Wischgummis 8 ein Winkel kleiner als 90° einschließen, der sich zur Unterseite des Wischblattes 4a, d. h. zu der Fahrzeugscheibe hin öffnet, sodass die aus den Spritzöffnungen 12 austretenden Spritzstrahlen jeweils mit einem gewissen Abstand von der Wischlippe 9 auf die Fahrzeugscheibe auftreffen.

Der Profilkörper 10 ist von einer Länge eines Strangprofils aus Kunststoff, beispielsweise aus einem elastomeren Kunststoff gebildet. Die Federschiene 7 ist bei der dargestellten Ausführungsform zweiteilig ausgeführt und besteht aus einer Profilschiene 13 aus Kunststoff sowie aus einem leisten- oder streifenartigen Federelement 14 aus Federstahl, welches mit seinen Oberflächenseiten in Ebenen senkrecht zur Mittelebene M angeordnet ist. Die Profilschiene 13 bildet eine geschlossene Kammer zur Aufnahme des Federelementes 14 sowie bei der für die Figur 8 gewählten Darstellungen darunter einen C-förmigen Profilabschnitt, in welchem der Wischgummi 8 gehalten ist.

Zum Befestigen des Wischblattes 4a an einem Wischarm 1 dient der in der Wischblattmitte oder etwa in der Wischblattmitte am Wischarm befestigte Adapter 3a, der bei der dargestellten Ausführungsform zweiteilig ausgebildet ist, und zwar bestehend aus zwei identischen Hälften oder Adapterteilen 15. Beide sind aus Metall oder beispielsweise durch Spritzgießen aus Kunststoff gefertigt, und zwar derart, dass bei am Wischblatt 4a befestigtem Adapter 3a dieser mit Profilabschnitten 15.1 die Federschiene 7 reiterartig und formschlüssig übergreift, und zwar selbstverständlich derart, dass auch im Bereich des Adapters der Wischgummi 8 über diesen Adapter nach unten vorsteht.

Um den Adapter 3a an der Federschiene 7 gegen Verschieben in Längsrichtung zu sichern, sind an den Profilabschnitten 15.1 innen Vorsprünge 16 angeformt, die in seitlich Ausnehmungen der Profilschiene 13 eingreifen. An wandartigen Profilabschnitten 15.2 oberhalb der Federschiene 7 liegen die beiden Adapterhälften oder -teile 15 in einer Trenn- oder Anschlussebene TE flächig an einander an und sind dort mit einander verbunden, und zwar u. a. dadurch, dass jedes Adapterteil 15 einen angeformten Zapfen 17 aufweist, der bei verbundenen Adapterteilen 15 von einer passenden Ausnehmung 18 des anderen Adpaterteils aufgenommen ist. Die Ebene TE ist zugleich auch die Mittelebene M, zu der die Federschiene 7 sowie auch der Wischgummi 8 spiegelsymetrisch ausgebildet sind.

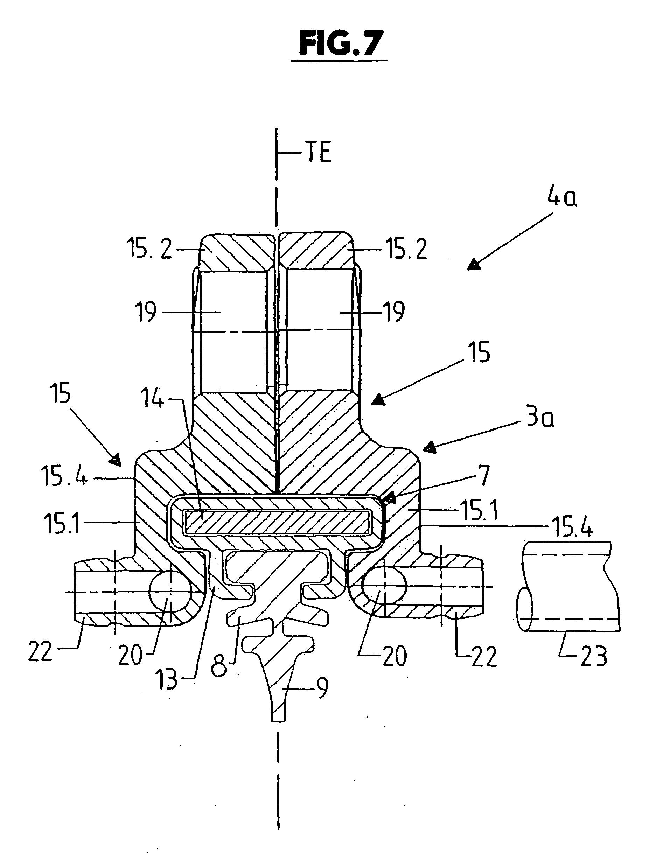

Mit AM ist in den Figuren 5 und 9 eine Mittelebene des jeweiligen Adapterteils 15 angegeben, die (Mittelebene) senkrecht zur Ebene TE (Figur 7) liegt und zu der jedes Adapterteil 15 mit Ausnahme des Zapfens 17 und der passenden Bohrung 18 spiegelsymetrisch ausgebildet ist, wobei sich der Zapfen 17 und die Bohrung 18 mit jeweils gleichem Achsabstand auf verschiedenen Seiten der Ebene AM befinden. Im Bereich der Mittelebene AM ist der Profilabschnitt 15.2 jedes Adapterteils 15 mit einer Bohrung 19 versehen, die mit ihrer Achse senkrecht zur Ebene TE orientiert ist und die zur Befestigung des Adapters 3 am Wischarm 1 dient.

Mit 15.2 sind in den Figuren die beiden einander abgewandten und jeweils in Ebenen senkrecht zur Längserstreckung des Wischblattes 4a angeordneten Stirnseiten und mit 15.3 die der Federschiene 7 abgewandten Außenseiten der Adapterteile 15 bzw. des Adapters 3a bezeichnet.

Jedes Adapterteil 15 ist am Profilabschnitt 15.1 bzw. am unteren, sich senkrecht zur Ebene AM erstreckenden freien Rand als Anschluss- und Verteilerelement ausgebildet, und zwar mit einem sich in der Achsrichtung senkrecht zur Ebene AM erstreckenden Anschluss- und Verteilerkanal 20, der beidendig jeweils in einen hohlzapfenartigen Anschluss 21 übergeht, sowie mit einem hohlzapfenartigen Anschluss 22, welcher etwa in der Mitte in den Anschluss- und Verteilerkanal 20 mündet. Die beiden Anschlüsse 21 befinden sich jeweils an einer der beiden Stirnseiten 15.3 und der Anschluss 22 an der Außenseite 15.4 des betreffenden Adapterteils 15. Der jeweilige Anschluss- und Verteilerkanal 20 mit den Anschlussstücken 21 und 22 bildet somit ein in den betreffenden Adapterteil 15 integriertes T-Stück.

Nach dem Befestigen des Adapters 3a auf der Federschiene 7 wird auf diese Federschiene beidseitig von dem Adapter 3a jeweils ein Teil des Profilkörper 10 aufgeschoben, und zwar derart, dass die an der betreffenden Stirnseite 15.3 vorgesehenen Anschlüsse 21 jeweils in einen Kanalabschnitt 11 hineinreichen und dadurch eine dichte hydraulische Verbindung zwischen dem betreffenden Anschluss- und Verteilerkanal 20 und dem anschließenden Kanalabschnitt 11 erreicht ist, der dann achsgleich mit der Achse des Anschluss- und Verteilerkanals 20 und des Anschlusses 21 vorgesehen ist. Der Anschluss 22 wird jeweils mit einer äußeren Schlauchleitung 23 zum Zuführen der Wasch- und Reinigungsflüssigkeit verbunden. Der Anschluss- und Verteilerkanal 20 liegt achsgleich mit den Anschlüssen 21 sowie auch achsgleich mit den Kanalabschnitten 11.

Die Spritzöffnungen 12 können in unterschiedlichster Weise realisiert sein, beispielsweise mit Hilfe eines Bohrwerkzeugs, durch Stechen oder mit Hilfe einer Lasereinrichtung, wobei die Anordnung und/oder Größe der Spritzöffnungen 12 an den jeweiligen Verwendungsfall optimal angepasst werden.

Bei einer bevorzugten Ausführungsform sind die Spritzöffnungen 12 beispielsweise so ausgeführt, dass sie erst bei einem ausreichenden Druck (Druck-Schwellwert) der Wasch- oder Reinigungsflüssigkeit öffnen und sich selbsttätig bei einem Unterschreiten des Druck-Schwellwertes schließen, sodass ein Verdunsten eines in der Wasch- oder Reinigungsflüssigkeit enthaltenen Frostschutzmittels und/oder Reinigungszusatzes, beispielsweise Alkohol, im Kanalabschnitt 11 bzw. im Bereich der Spritzöffnungen 12 vermieden ist und damit u.a. auch ein Zufrieren der Spritzöffnungen 12.

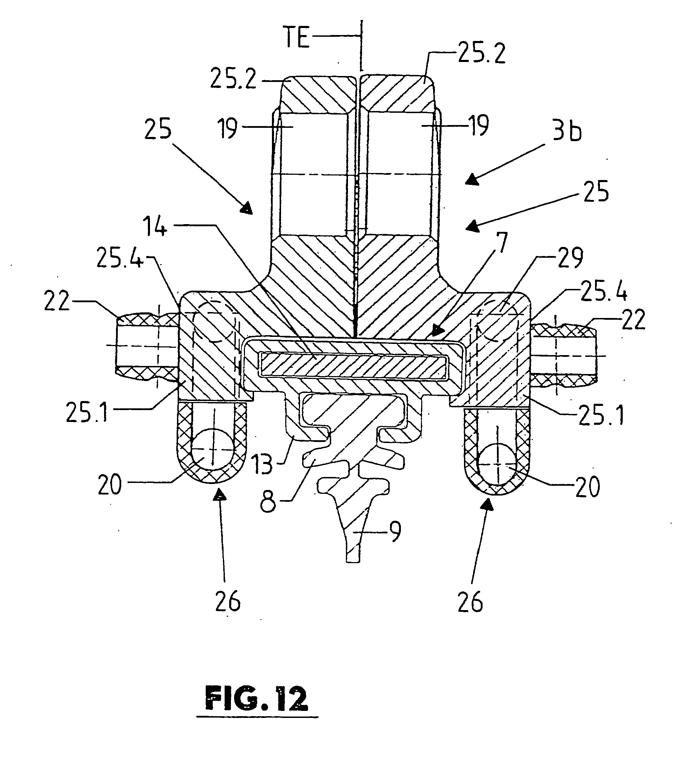

Die Figuren 12 -19 zeigen ein Wischblatt 4b, welches sich von dem Wischblatt 4a im Wesentlichen nur dadurch unterscheidet, dass anstelle des zweiteiligen Adapters 3a ein zweiteiliger Adapter 3b verwendet ist, der aus den beiden Adapterhälften oder
-teilen 25 besteht, die hinsichtlich ihrer Formgebung nahezu identisch mit den Adapterteilen 15 sind, allerdings mit dem Unterschied, dass der Anschluss- und Verteilerkanal 20 in die Adapterteile 25 nicht integriert ist. Wie die Figur 12 zeigt, wird die Federschiene 7 bei diesem Wischblatt wiederum formschlüssig und reiterartig vom Adapter 3b bzw. dessen Profilabschnitten 25.1 umgriffen. Weiterhin sind die beiden Adapterteile 25 mit ihren Profilabschnitten 25.2, die in der Teilungs- oder Anschlussebene TE aneinander anliegen, dort miteinander verbunden, und zwar wiederum u. a. durch die in die Bohrungen 18 eingreifenden Zapfen 17. Mit Ausnahme des Zapfens 17 und der zugehörigen Bohrung 18 sind weiterhin auch die Adapterteile 25 bezogen auf die Ebene AM spiegelsymetrisch ausgebildet. Die Achsabstände des Zapfens 17 und der zugehörigen Bohrung 18 von der Ebene AM sind identisch. In der Mittelebene befindet sich die Bohrung 19.

Mit 25.3 sind die beiden, in Ebenen senkrecht zur Längserstreckung des Wischblattes 4b angeordneten Stirnseiten des Adapters 3b und mit 25.4 die beiden Außenseiten dieses Adapters bezeichnet.

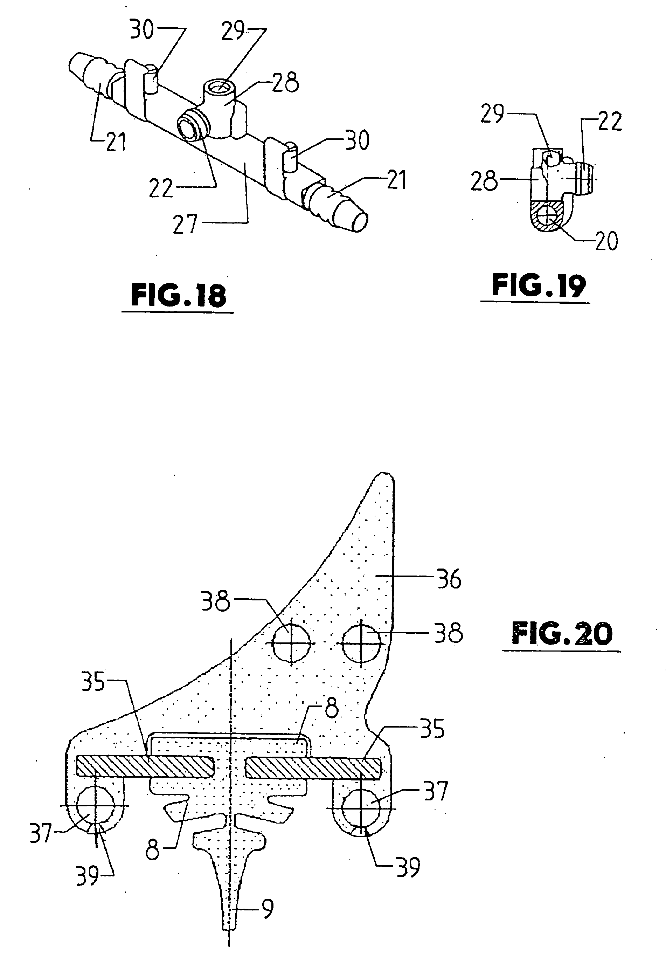

An der dem Profilabschnitt 25.2 entferntliegenden Unterseite des Profilabschnittes 25.1 ist bei dieser Ausführungsform ein ebenfalls als Spritzgießteil aus Kunststoff gefertigtes Anschluss- und Verteilerelement 25 befestigt, und zwar durch Einrasten. Das Anschluss- und Verteilerelement 26 besteht aus einem rohrartigen Körper 27, in welchem der Anschluss- und Verteilerkanal 20 ausgebildet ist und welches beidendig jeweils einen Anschluss 21 aufweist. In der Mitte ist am Körper 27 ist der Anschluss 22 für die äußere Schlauchleitung 23 vorgesehen. Der Anschluss 22 mündet bei dieser Ausführung aber nicht direkt in den Anschluss- und Verteilerkanal 20, sondern in einen rohrförmigen Ansatz 28, der radial über die in den Figuren 18 und 19 obere Seite des Körpers 27 vorsteht und der seinerseits mit dem Anschluss- und Verteilerkanal 20 innerhalb des Körpers 27 in Verbindung steht. An dem in diesen Figuren oberen, dem Körper 27 entferntliegenden Ende ist der Kanal des Ansatzes 28 in geeigneter Weise, beispielsweise durch eine eingesetzte Kugel 29 verschlossen.

Zur Befestigung des Anschluss- und Verteilerelementes 26 an der Unterseite des jeweiligen Profilabschnittes 25.1 sind an der Oberseite des Körpers 27, an der (Oberseite) auch der Ansatz 28 vorgesehen ist, zwei radial wegstehende Zapfen 30 angeformt, denen entsprechende Bohrungen 31 an der Unterseite des jeweiligen Profilabschnittes 25.1 zugeordnet sind, sodass zum Befestigen des Anschluss- und Verteilerelementes 26 die Zapfen 30 jeweils in eine Bohrung 31 eingeführt werden können. Zur endgültigen Verriegelung sind am Körper 27 Rastfinger 32 angeformt, die nach dem Einführen der Zapfen 30 in die Bohrungen 32 an Gegenrasten 33 einrasten, die an der Außenfläche 25.4 des betreffenden Adapterteils 25 gebildet sind.

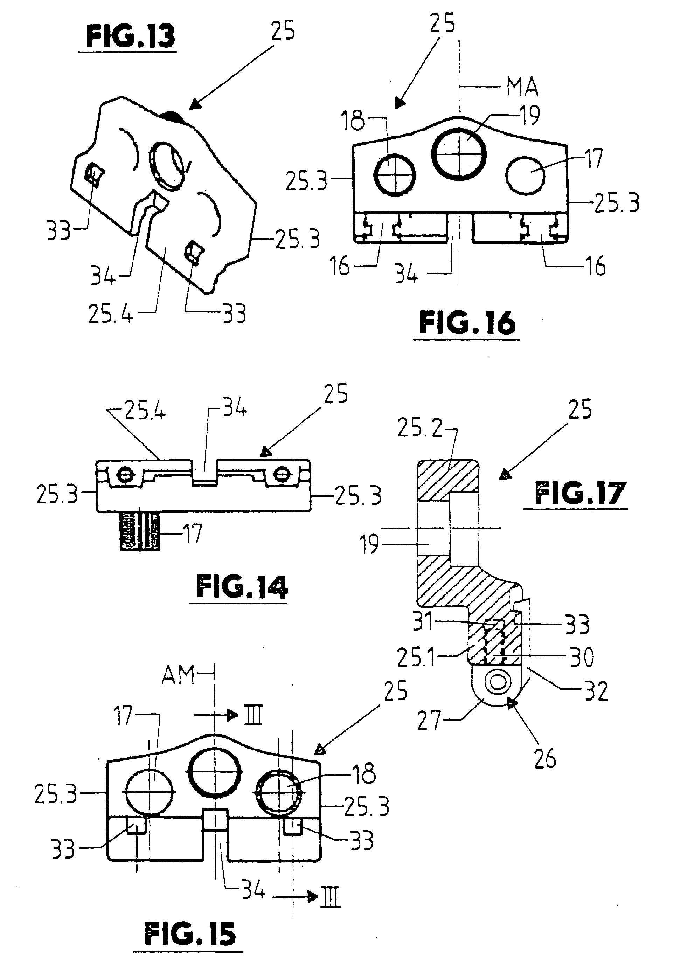

Wie insbesondere die Figuren 13 und 17 zeigen, besitzen die Adapterteile 25 am Profilabschnitt 25.1 eine Ausnehmung 34, in der bei am betreffenden Adapterteil 25 befestigten Anschluss- und Verteilerelement 26 der Ansatz 28 aufgenommen ist, wodurch u. a. ein zusätzlicher Halt für das Anschluss- und Verteilerelement 26 am Adapterteil 25 erreicht ist und sich außerdem eine besonders schmale Bauform für den Adapter 3b mit Anschluss- und Verteilerelement 26 ergibt. Der mit seiner Achse senkrecht zur Ebene M orientierte Anschluss 22 in einem deutlichen Abstand von der Unterseite des Adapters 3b und damit auch die angeschlossen Schlauchleitung in ausreichendem Abstand von der Fahrzeugscheibe.

Die Anschlüsse 21 werden wiederum, wie vorstehend für das Wischblatt 4a beschrieben, beim Aufschieben der Teile des Profilkörpers 10 auf die Federschiene 7 mit jeweils einem Kanalabschnitt 11 verbunden. Der jeweilige Anschluss 22 wird mit der äußeren Schlauchleitung 23 verbunden. Speziell bei dieser Ausführung besteht auch die Möglichkeit, nur an einem der beiden Adapterelemente 25 ein Anschluss- und Verteilerelement 26 vorzusehen, sodass dann auch nur einer der beiden Kanalabschnitte 11 des Profilkörpers 10 mit der Wasch- und Reinigungsflüssigkeit versorgt wird und/oder die beidseitig von dem Adapter 3b vorgesehenen Teile des Profilkörper 10 jeweils nur mit einem Kanalabschnitt 11 ausgebildet sind.

Die Figur 20 zeigt in einer Darstellung ähnlich Figur 8 ein Wischblatt 4c, weiches wiederum aus dem Wischgummi 8 mit Wischlippe 9 und aus zwei an der Wischblattoberseite als Spoiler geformten Teilen eines Profilkörpers 36 gebildet ist, die beidseitig von einem, beispielsweise hinsichtlich der Funktion dem Adapter 3a entsprechenden, Adapter vorgesehen sind. Über die beiden Federschienen 35 ist der Wischgummi 8 am Profilkörper 36 gehalten. Im Profilkörper 36 sind bei dieser Ausführungsform insgesamt vier Spritzkanäle ausgebildet, und zwar mit den Kanalabschnitten 37 zwei Spritzkanäle beidseitig vom Wischgummi 8 und unterhalb der Federschienen 35 und mit den Kanalabschnitten 38 zwei weitere Spritzkanäle oberhalb der Federschienen 35. Sämtliche Kanalabschnitte 37 und 38 sind wiederum mit Spritzöffnungen 39 zum Ausbringen der Wasch- oder Reinigungsflüssigkeit versehen.

Der beispielsweise dem Adapter 3a entsprechender Adapter ist bei dieser Ausführungsform unmittelbar auf den beiden Federschienen 35 befestigt. Die in diesem Adapter ausgebildeten, den Anschluss- und Verteilerkanälen 20 entsprechenden Kanäle sind jeweils mit einem Spritzkanalabschnitt 37 bzw. 38 verbunden.

Die Erfindung wurde voranstehend an Ausführungsbeispielen beschrieben. Es versteht sich, dass zahlreiche Änderungen sowie Abwandlungen möglich sind. So ist es beispielsweise möglich, bei dem Wischblatt 4a den Profilkörper 10 und die Profilschiene 13 aus ein und dem selben Material, beispielsweise Kunststoffmaterial zu fertigen und/oder den Profilkörper 10 im Zweikomponentenspritzgießverfahren an die Profilschiene 13 anzuspritzen.

Weiterhin ist es auch möglich, den Adapter 3a so auszubilden, dass nur eines der beiden Adapterteile 15 das in diesem Teil integrierte Anschluss- und Verteilerelement, d. h. den Anschluss- und Verteilerkanal 20 und die beiden Anschlüsse 21 und 22 aufweist, und zwar bei Ausbildung des Wischblattes mit nur einem Spritzkanal.

Weiterhin besteht auch die Möglichkeit, den Adapter so auszubilden, dass über einen einzigen Anschluss 22 bzw. über eine einzige Schlauchleitung 23 mehrere Spritzkanäle, beispielsweise Spritzkanäle an beiden Längsseiten des Wischblattes mit der Reinigungs- und Waschflüssigkeit versorgt werden.

Bei sämtlichen, vorstehend beschriebenen Ausführungsformen sind die Spritzkanäle bzw. die diese Kanäle bildenden Kanalabschnitte jeweils in dem Profilkörper 10 bzw. 35 des Wischblattes vorgesehen. Grundsätzlich besteht auch die Möglichkeit, derartige Kanäle bei entsprechender Ausbildung im Wischgummi 8 vorzusehen.

Weiterhin besteht auch die Möglichkeit, den jeweiligen Adapter einteilig auszubilden und dann das wenigstens eine Anschluss- und Verteilerelement bzw. den betreffenden Kanal 20 und die Anschlüsse 21 und 22 in diesen Adapter zu integrieren oder aber entsprechend dem Anschluss- und Verteilerelement 26 als gesondertes Bauteil am ansonsten einstückigen Adapter beispielsweise durch Einrasten oder auf andere geeignete Weise zu befestigen.

### Bezugszeichenliste

- 1: Wischarm
- 2: Wischachse
- 3, 3a, 3b: Adapter
- 4, 4a, 4b, 4c: Wischblatt
- 5: Spritzkanal
- 6: Strahl der Reinigungs- oder Waschflüssigkeit
- 7: Federschiene
- 8: Wischgummi
- 9: Wischlippe
- 10: Profilkörper
- 10.1, 10.2: Profilabschnitt des Profilkörpers 10
- 11: Spritzkanalabschnitt
- 12: Spritzöffnung
- 13: Profilschiene
- 14: Federelement
- 15: Adapterteil
- 15.1, 15.2: Profilabschnitt
- 15.3: Stirnseite des Adapterteils 15 bzw. Adapters 3a
- 15.4: Außenseite des Adapterteils 15 bzw. Adapters 3a
- 16: Vorsprung
- 17: Zapfen
- 18: Öffnung
- 19: Bohrung
- 20: Anschluss- und Verteilerkanal
- 21, 22: Anschluss
- 23: Schlauchleitung

- 25: Adapterteil
- 25.1, 25.2: Profilabschnitt
- 25.3: Stirnseite des Adapterteils 25 bzw. Adapters 3b
- 25.4: Außenseite des Adapterteils 25 bzw. Adapters 3b
- 26: Anschluss- und Verteilerelement
- 27: Körper des Anschluss- und Verteilerelementes
- 28: Abschnitt oder Fortsatz
- 29: Verschlusselement
- 30: Zapfen
- 31: Bohrung
- 32: Rastfinger
- 33: Gegenrast
- 34: Ausnehmung
- 35: Federschiene
- 36: Profilkörper
- 37, 38: Spritzkanalabschnitt
- 39: Spritzöffnung

## Patentansprüche

1. Wischblatt, insbesondere flaches Wischblatt, zum Reinigen von Scheiben an Fahrzeugen, insbesondere Kraftfahrzeugen, mit wenigstens einem im Wischblatt (4, 4a, 4b, 4c) ausgebildeten Spritzkanal (5, 11, 37, 38) mit Spritzöffnungen (12, 39) zum Ausbringen einer Wasch- oder Reinigungsflüssigkeit auf die zu reinigende Scheibe, mit wenigstens einem ersten Anschluss (22) zum Anschließen des Spritzkanals an eine äußere Leitung (23) zum Zuführen der Wasch- oder Reinigungsflüssigkeit sowie mit wenigstens einem Adapter (3, 3a, 3b) zum Verbinden des Wischblattes (4, 4a, 4b, 4c) mit einem Wischarm (1) der Wischvorrichung,
wobei
der wenigstens eine erste Anschluss (22) Teil eines am Adapter (3, 3a, 3b) vorgesehenen oder ausgebildeten Anschluss- und Verteilerelementes (26) ist, welches über jeweils wenigstens einen zweiten Anschluss (21) mit einem sich von dem Adapter (3, 3a, 3b) wegerstreckenden Kanalabschnitt (11, 36, 37) des Spritzkanals (5) verbunden ist, **gekennzeichnet durch** einen Anschluss- oder Verteilerkanal (20), der sich in Wischblattlängsrichtung erstreckt und jeweils beidendig einen zweiten Anschluss (21) bildet und in den der erste Anschluss (22) mündet,
wobei der Adapter (3a, 3b) das Wischblatt (4a) oder wenigstens eine Federschiene (7, 34) des Wischblattes klammer- oder reiterartig mit Adapter- oder Profilabschnitten (15.1, 25.1) übergreift, und wobei an einer der Wischlippe (9) zugewandten Unterseite wenigstens eines dieser Profilabschnitte (15.1, 25.1) der Anschluss- oder Verteilerkanal (20) bzw. das diesen Kanal aufweisende Anschluss- oder Verteilerelement (24) vorgesehen sind.

2. Wischblatt nach Anspruch 1, **dadurch gekennzeichnet, dass** an wenigstens einer Längsseite des Wischblattes (4, 4a, 4b, 4c) wenigstens ein Spritzkanal (5) vorgesehen ist, der von mindestens zwei sich von dem wenigstens einen Adapter (3, 3a, 3b) entgegengesetzt wegerstreckenden Kanalabschnitten (11, 36) gebildet ist.

3. Wischblatt nach Anspruch 1, **dadurch gekennzeichnet, dass** an beiden Längsseiten des Wischblattes (4, 4a, 4b, 4c) jeweils wenigstens ein Spritzkanal (5) vorgesehen ist, der von mindestens zwei sich von dem wenigstens einen Adapter (3, 3a, 3b) entgegengesetzt wegerstreckenden Kanalabschnitten (11, 36) gebildet ist.

4. Wischblatt nach einem der vorhergehenden Ansprüche, **dadurch gekennzeichnet, dass** die den wenigstens einen Spritzkanal (5) bildenden Kanalabschnitte (11, 36, 37) in einem Wischblattkörper oder Profilkörper (10) vorgesehen sind, an welchem ein wenigstens eine Wischlippe aufweisender Wischgummi (8) gehalten ist.

5. Wischblatt nach einem der vorhergehenden Ansprüche, **dadurch gekennzeichnet, dass** das wenigstens eine Anschluss- und Verteilerelement mit dem Anschluss- und Verteilerkanal (20), mit den ersten und zweiten Anschlüssen (22, 21) einstückig mit dem Adapter (3a) oder mit diesen Adapter bildenden Adapterelementen (15) hergestellt ist,

6. Wischblatt nach einem der vorhergehenden Ansprüche, **dadurch gekennzeichnet, dass** das wenigstens eine Anschluss- und Verteilerelement (26) an dem Adapter (3b) oder an einem diesen Adapter bildenden Adapterteil (25) vorzugsweise durch Einrasten befestigt ist.

7. Wischblatt nach Anspruch 6, **dadurch gekennzeichnet, dass** das Anschluss- und Verteilerelement (26) aus einem rohrartigen, den Anschluss- und Verteilerkanal (20) mit den ersten und zweiten Anschlüssen (21, 22) aufweisenden rohrartigen Körper (27) besteht.

8. Wischblatt nach Anspruch 6 oder 7, **dadurch gekennzeichnet**, **dadurch gekennzeichnet, dass** an dem rohrartigen Körper (27) Zapfen sowie Rastfinger oder Rastnasen (32) angeformt sind, und dass am Adapter (3b) Bohrungen (31) zur Aufnahme der Verbindungszapfen (30) sowie Gegenrasten (33) für die Rast bzw. Rastfinger (32) vorgesehen sind.

9. Wischblatt nach einem der vorhergehenden Ansprüche, **dadurch gekennzeichnet, dass** der Adapter (3a, 3b) zweiteilig mit wenigstens zwei Adapterteilen (15, 25) hergestellt ist.

10. Wischblatt nach einem der vorhergehenden Ansprüche, **dadurch gekennzeichnet, dass** der Adapter einteilig hergestellt ist.

11. Wischblatt nach einem der vorhergehenden Ansprüche, **dadurch gekennzeichnet, dass** die Spritzöffnungen (12, 39) als selbstschließende Öffnungen ausgebildet sind, die erst bei einem bestimmten Schwellwert des Druckes der im jeweiligen Spritzkanal vorhandenen Reinigungs- oder Waschflüssigkeit öffnen.

12. Wischblatt nach Anspruch 11, **dadurch gekennzeichnet, dass** der wenigstens eine Spritzkanal in einem aus einem gummielastischen Material, beispielsweise aus einem elastomeren Kunststoff hergestellten Teil des Wischblattes vorgesehen ist, und dass die Spritzöffnungen (12, 39) von jeweils wenigstens einem Schlitz gebildet sind, dessen Öffnungsränder bei einem Druck der Reinigungs- und Waschflüssigkeit unter dem Schwellwert dichtend gegeneinander anliegen und erst bei einem Druck über dem Schwellwert die jeweilige Spritzöffnung freigeben.

## Claims

1. Wiper blade, particularly a flat wiper blade, for cleaning windscreens of vehicles, particularly motor vehicles, with at least one spray duct (5, 11, 37, 38) with spray orifices (12, 39) arranged in the wiper blade (4, 4a, 4b, 4c) for application of a washing or cleaning fluid to the windscreen to be cleaned, with at least one first connection (22) for connecting the spray duct to an external line (23) for supplying the washing or cleaning fluid and with at least one adapter (3, 3a, 3b) for connecting the wiper blade (4, 4a, 4b, 4c) to a wiper arm (1) of the wiping device, wherein, the at least one connection (22) is part of a connection and distribution element (26) provided or designed on the adapter (3, 3a, 3b), which is connected by at least one second connection (21) respectively to a duct section (11, 36, 37) of the spray duct (5) extending away from the adapter (3, 3a, 3b), **characterised by** a connection or distribution duct (20), extending in the longitudinal direction of the wiper blade and forming a second connection (21) at both ends respectively and leading into the first connection (22), wherein the adapter (3a, 3b) overlaps the wiper blade (4a) or at least a spring rail (7, 34) of the wiper blade in the manner of a clamp or slide with adapter or profile sections (15.1, 25.1) and wherein on an underside facing the wiping lip (9) of at least one of these profile sections (15.1, 25.1), the connection or distribution duct (20) or the connection or distribution duct having this duct (24) is arranged.

2. Wiper blade according to claim 1, **characterised in that** at least one spray duct (5) is arranged on at least one longitudinal side of the (4, 4a, 4b, 4c), which is formed by at least two duct sections (11, 36) extending away in the opposite direction from the at least one adapter (3, 3a, 3b).

3. Wiper blade according to claim 1, **characterised in that** at least one spray duct (5) is provided on both longitudinal sides of the wiper blade (4, 4a, 4b, 4c), which is formed by at least two duct sections (11, 36) extending away in the opposite direction from at least one adapter (3, 3a, 3b).

4. Wiper blade according to one of the above claims, **characterised in that** the duct sections (11, 36, 37) forming the at least one spray duct (5) are provided in a wiper blade body or profile body (10), on which at least one wiping rubber (8) having a wiping lip is held.

5. Wiper blade according to one of the above claims, **characterised in that** the at least one connection and distribution element with the connection and distribution duct (20), with the first and second connections (22, 21) is manufactured in one piece with the adapter (3a) or with the adapter elements (15) forming this adapter.

6. Wiper blade according to one of the above claims, **characterised in that** the at least one connection and distribution element (26) is preferably fixed by snapping in place on the adapter (3b) or on an adapter part (25) forming this adapter.

7. Wiper blade according to claim 6, **characterised in that** the connection and distribution element (26) consists of a tube-like body (27) having the connection and distribution duct (20) with the first and second connections (21, 22).

8. Wiper blade according to claim 6 or 7, **characterised in that** pins in addition to latches or catches (32) are arranged on the tube-like body (27) and that on the adapter (3b) drill holes (31) to receive the connecting pins (30) in addition to counter catches (33) for the latches or catches (32) are provided.

9. Wiper blade according to one of the above claims, **characterised in that** the adapter (3a, 3b) is manufactured in two parts with at least two adapter parts (15, 25).

10. Wiper blade according to one of the above claims, **characterised in that** the adapter is manufactured in one piece.

11. Wiper blade according to one of the above claims, **characterised in that** the spray orifices (12, 39) are designed as self-closing orifices which only open at a certain threshold value of the pressure of the cleaning or washing fluid present in the respective spray duct.

12. Wiper blade according to claim 11, **characterised in that** the at least one spray duct is provided in a part of the wiper blade manufactured from an elastomer plastic for example and that the spray orifices (12, 39) are formed of at least one slit respectively, the opening edges of which lie adjacent to one another forming a seal when the pressure of the cleaning and washing fluid is below the threshold value and only release the respective spray orifice at a pressure above the threshold value.

## Revendications

1. Raclette d'essuie-glace, en particulier raclette plate, pour nettoyer les vitres de véhicules, en particulier de véhicules automobiles, comportant au moins un canal d'aspersion (5, 11, 37, 38), aménagé dans la raclette (4, 4a, 4b, 4c), comprenant des ouvertures d'aspersion (12, 39) destinées à épandre un liquide de lavage ou de nettoyage sur la vitre à nettoyer, comportant au moins un premier raccordement (22) pour raccorder le canal d'aspersion à une conduite extérieure (23) destinée à l'acheminement du liquide de lavage ou de nettoyage ainsi qu'au moins un adaptateur (3, 3a, 3b) destiné à relier la raclette (4, 4a, 4b, 4c) à un bras d'essuie-glace (1) de l'essuie-glace, au moins un premier raccordement (22) faisant partie d'un élément de raccordement et de répartition (26) prévu ou aménagé sur l'adaptateur (3, 3a, 3b), lequel est relié, par au moins un deuxième raccordement (21) à un tronçon de canal (11, 36, 37) du canal d'aspersion (5) s'éloignant de l'adaptateur (3, 3a, 3b), **caractérisée par** un canal de raccordement ou de répartition (20) qui s'étend dans le sens longitudinal de la raclette et forme, sur les deux extrémités, un deuxième raccordement (21) et débouche dans le premier raccordement (22), l'adaptateur (3a, 3b) saisissant par le dessus la raclette (4a) ou au moins une lame-ressort (7, 34) de la raclette tel une pince ou un cavalier, avec des tronçons d'adaptateur ou de profilé (15.1, 25.1), et le canal de raccordement ou de répartition (20) respectivement l'élément de raccordement ou de répartition (24) présentant ce canal étant prévus sur un dessous, dirigé vers la lèvre d'essuyage de l'un des tronçons de profilé (15.1, 25.1).

2. Raclette d'essuie-glace selon la revendication 1, **caractérisée en ce que** sur au moins un des côtés longitudinaux de celle-ci (4, 4a, 4b, 4c) se trouve au moins un canal d'aspersion (5) formé d'au moins deux tronçons de canal (11, 36) s'éloignant en sens opposé d'au moins un adaptateur (3, 3a, 3b).

3. Raclette d'essuie-glace selon la revendication 1, **caractérisée en ce que** sur les deux côtés longitudinaux de celle-ci (4, 4a, 4b, 4c) se trouve au moins un canal d'aspersion (5) formé d'au moins deux tronçons de canal (11, 36) s'éloignant en sens opposé d'au moins un adaptateur (3, 3a, 3b).

4. Raclette d'essuie-glace selon l'une quelconque des revendications précédentes, **caractérisée en ce que** les tronçons de canal (11, 36, 37) formant au moins un canal d'aspersion (5) sont prévus dans un corps d'essuie-glace ou corps profilé (10) sur lequel au moins une lame racleuse (8) présentant une lèvre d'essuyage est maintenue.

5. Raclette d'essuie-glace selon l'une quelconque des revendications précédentes, **caractérisée en ce qu'**au moins un élément de raccordement et de répartition comportant le canal de raccordement et de répartition (20), avec les premiers et deuxièmes raccordements (22, 21), forme une seule pièce avec l'adaptateur (3a) ou avec ces éléments d'adaptateur (15) qui forment cet adaptateur.

6. Raclette d'essuie-glace selon l'une quelconque des revendications précédentes, **caractérisée en ce qu'**au moins un élément de raccordement et de répartition (26) est fixé sur l'adaptateur (3b) ou sur une pièce d'adaptation (25) formant cet adaptateur, de préférence au moyen d'encoches.

7. Raclette d'essuie-glace selon la revendication 6, **caractérisée en ce que** l'élément de raccordement et de répartition (26) est constitué d'un corps (27) tubulaire présentant le canal de raccordement et de répartition (20) avec les premiers et deuxièmes raccordements (21, 22).

8. Raclette d'essuie-glace selon la revendication 6 ou la revendication 7, **caractérisée en ce que** des tétons ainsi que des tiges ou des ergots d'encliquetage (32) sont aménagés sur le corps tubulaire (27) et des perçages (31) sont prévus sur l'adaptateur (3b) afin de loger le téton de liaison (30) ainsi que des contre-encoches (33) pour l'encliquetage respectivement les tiges d'encliquetage (32).

9. Raclette d'essuie-glace selon l'une quelconque des revendications précédentes, **caractérisée en ce que** l'adaptateur (3a, 3b) est en deux parties avec au moins deux pièces d'adaptation (15, 25).

10. Raclette d'essuie-glace selon l'une quelconque des revendications précédentes, **caractérisée en ce que** l'adaptateur est d'une seule pièce.

11. Raclette d'essuie-glace selon l'une quelconque des revendications précédentes, **caractérisée en ce que** les ouvertures d'aspersion (12, 39) sont des ouvertures à fermeture automatique qui ne s'ouvrent qu'à une certaine valeur de seuil de la pression du liquide de nettoyage ou de lavage présent dans le canal d'aspersion respectif.

12. Raclette d'essuie-glace selon la revendication 11, **caractérisée en ce qu'**au moins un canal d'aspersion est prévu dans une pièce de la raclette fabriquée dans une matière caoutchouteuse élastique, par exemple une matière synthétique élastomère, et les ouvertures d'aspersion (12, 39) sont formées respectivement d'au moins une fente dont les bords plaquent hermétiquement l'un contre l'autre à une pression du liquide de nettoyage et de lavage inférieure à la valeur de seuil et ne dégagent l'ouverture d'aspersion concernée qu'à une pression supérieure à la valeur de seuil.
